# EUROPÄISCHE PATENTSCHRIFT

(11) **EP 2 571 703 B1**
(45) Veröffentlichungstag und Bekanntmachung des Hinweises auf die Patenterteilung: **11.06.2014**
(21) Anmeldenummer: 11715417.9
(22) Anmeldetag: 12.04.2011
(51) Int. Cl.: B60G 17/0195, B62D 17/00, B60K 23/08, B60W 30/02, B60W 30/18, B60G 17/016, B60G 21/055

(54) **VERFAHREN ZUM BETREIBEN EINES KRAFTFAHRZEUGS, SOWIE KRAFTFAHRZEUG**
METHOD FOR OPERATING A MOTOR VEHICLE AND MOTOR VEHICLE
PROCÉDÉ DE FONCTIONNEMENT D'UN VÉHICULE AUTOMOBILE AINSI QUE VÉHICULE AUTOMOBILE

(30) Priorität: 21.05.2010 DE 102010021210
(43) Veröffentlichungstag der Anmeldung: 27.03.2013
(73) Patentinhaber: Audi AG, 85045 Ingolstadt (DE)
(72) Erfinder: MEITINGER, Karl-Heinz, 81667 München (DE); KUNSCH, Peter, 85123 Karlskron (DE); ISGEN, Dirk, 38102 Braunschweig (DE); WEIN, Michael, 92358 Seubersdorf (DE); KOCH, Tilo, 85055 Ingolstadt (DE)
(86) Internationale Anmeldenummer: PCT/EP2011/001801
(87) Internationale Veröffentlichungsnummer: WO 2011/144279

(56) Entgegenhaltungen:
- EP-A1- 2 210 798
- DE-A1-102008 003 901
- GB-A- 2 358 163
- JP-A- 4 126 622
- JP-A- 59 053 216
- JP-A- 2009 143 402
- US-A- 5 517 414
- US-A1- 2002 074 746
- US-A1- 2008 066 976
- US-A1- 2008 183 353

## Beschreibung

Die Erfindung betrifft ein Verfahren zum Betreiben eines Kraftfahrzeugs, das die Eigenschaft hat, dass es in zumindest zwei Antriebsmodi fahrbar ist, wobei sich diese Modi bezüglich zumindest eines Rades darin voneinander unterscheiden, ob dieses Rad angetrieben wird oder nicht. Sie betrifft auch ein Kraftfahrzeug.

Bekannt sind z. B. die Antriebsmodi "Vorderradantrieb", "Heckantrieb" oder "Allradantrieb".

Zum Kraftfahrzeug ist ferner vorausgesetzt, dass es über ein so genanntes aktives Fahrwerk verfügt, d. h. dass an einer Fahrwerkseinrichtung im laufenden Betrieb des Kraftfahrzeugs Einstellungen vornehmbar sind.

Damit ein Kraftfahrzeugführer ein Kraftfahrzeug sicher fahren kann, muss er ein Gespür für das Kraftfahrzeug und seine Fahreigenschaften entwickeln. Wichtig ist z. B., dass der Fahrzeugführer das so genannte Eigenlenkverhalten des Kraftfahrzeuges kennt. Dieses lässt sich quantitativ durch den Eigenlenkgradienten angeben. Es handelt sich hierbei um eine Kennzahl, die für die Bedingung, dass das Kraftfahrzeug in einem Kreis mit konstantem Radius fährt, das Verhältnis des einzuschlagenden Lenkradwinkels zur Geschwindigkeit des Kraftfahrzeugs wiedergibt. Bei einem so genannten Untersteuern muss der Fahrzeugführer mehr lenken als eigentlich notwendig wäre, bei einem Übersteuern weniger lenken.

Ein Fahrzeugführer, der sein Kraftfahrzeug kennt, ist auf das Untersteuern beziehungsweise Übersteuern eingestellt.

Es kann nun sein, dass bei ein- und demselben Kraftfahrzeugführer der Antriebsmodus geändert wird. Dies kann aufgrund einer Fahrereingabe erfolgen. Es kann aber auch sein, dass eine Steuereinheit einen Wechsel des Antriebsmodus bewirkt; das ist z. B. bei Hybridfahrzeugen häufig der Fall, die neben einem Verbrennungsmotor einen elektrischen Antrieb aufweisen, der je nach Bedarf zu- oder abgeschaltet wird.

Es ist zu vermeiden, dass der Fahrzeugführer durch einen solchen Wechsel im Antriebsmodus aufgrund eines von ihm ungewohnten Fahrverhaltens des Kraftfahrzeugs in eine gefährliche Situation gelangt oder auch nur das Führen des Kraftfahrzeugs als in komfortabel, z. B. mit dem Gefühl einer Unsicherheit einhergehend, empfindet.

Die DE 10 2008 003 901 A1 betrifft ein Verfahren zur Einstellung der Radlasten an einem zweispurigen zweiachsigen Kraftfahrzeug. Im Falle unterschiedlicher Reibwerte an den beiden Fahrzeugseiten werden die Fahrzeugachsen gegensinnig verspannt, indem an der ersten Achse die Vertikallast des Rades auf der ersten Fahrzeugseite erhöht und die Vertikallast des Rades auf der zweiten Fahrzeugseite verringert wird, während an der zweiten Achse die Vertikallast des Rades auf der ersten Fahrzeugsseite verringert und die Vertikallast des Rades auf der zweiten Fahrzeugsseite erhöht wird.

Die JP 4 126622 A beschreibt ein Kraftfahrzeug mit einem Stoßdämpfer, wobei die Dämpfungscharakteristik des Stoßdämpfers mit einem entsprechenden Regler eingestellt werden kann. Hierbei wird bei einer abrupten Änderung des Antriebsmoments der Stoßdämpfer so eingestellt, dass ein sicheres und komfortables Fahren ermöglicht werden kann.

Die US 2008/183353 A1 offenbart ein Verfahren, bei dem mehrere Systeme zur Stabilitätskontrolle des Kraftfahrzeugs, beispielsweise die Anti-Schlupf-Regelung, das Anti-Blockiersystem und die Traktionskontrolle, entsprechend eingestellt werden. Diese Systeme nutzen zudem Informationen über den Reibungskoeffizienten der Straße. Diese Systeme steuern dann ein aktives Dämpfungssystem und/oder eine Verteilung der Antriebsmomente der Antriebsräder.

Die US 2008/066976 A1 beschreibt ein Fahrzeug mit Allradantrieb, wobei jedem Rad ein Antriebsmotor zugeordnet ist. Hierbei wird der Zusammenhang zwischen einer Änderung von dem Lenkrollradius und dem Hub des Rades in Abhängigkeit von der Bremskraftverteilung oder der Verteilung des Antriebsmoments für zumindest eines der Vorder- oder Hinterräder.

Aus der US 5,517,414 A ist ein aktives Dämpfungssystem für ein Kraftfahrzeug bekannt, wobei bei einem festgestellten hohen Radschlupf die Normalkraft auf das durchdrehende Rad erhöht wird und die Normalkraft auf das Rad, das dem durchdrehenden Rad gegenüberliegt, reduziert.

Des Weiteren beschreiben die US 2007/0265749 A1 und die US 2008/0243336 A1 ein Verfahren zum Einstellen der Fahreigenschaften eines Kraftfahrzeugs. Dabei können beispielsweise die Fahrwerkseinstellungen in Abhängigkeit von der Eingabe eines Benutzers eingestellt werden.

Zudem ist aus der JP 2 003508 A eine Vorrichtung zum Einstellen der Höhe eines Allradfahrzeugs bekannt. Dabei kann die Höhe des Fahrzeugs in Abhängigkeit von einer Einstellung des Differentials bestimmt werden.

Schließlich beschreibt die US 6,168,171 B1 ein Verfahren zum Einstellen der Höhe eines Kraftfahrzeugs. Dabei kann auch der Lenkwinkel und der Zustand eines Differentials berücksichtigt werden. Weiterhin kann auch berücksichtigt werden, ob das Kraftfahrzeug im Vorderradantrieb, Heckantrieb oder Allradantrieb gefahren wird.

Es ist Aufgabe der Erfindung, einen Weg aufzuzeigen, wie in erhöhtem Maße für eine Sicherheit beim Führen eines Kraftfahrzeugs gesorgt werden kann.

Die Aufgabe wird hinsichtlich des Verfahrens durch den Gegenstand des Patentanspruchs 1 gelöst, hinsichtlich des Kraftfahrzeugs durch den Gegenstand des Patentanspruchs 7.

Bei dem erfindungsgemäßen Verfahren wird somit ausgenutzt, dass die Fahrwerkseinrichtung aktiv ist: Bei einer Änderung des Antriebsmodus erfolgt nämlich eine automatische Änderung bezüglich zumindest einer an der Fahrwerkseinrichtung des Kraftfahrzeugs möglichen Einstellung.

Gemäß der Erfindung erfolgt die Änderung bezüglich der Einstellung an der Fahrwerkseinrichtung derart, dass eine das Eigenlenkverhalten des Kraftfahrzeugs beschreibende Größe einen vorbestimmten Wert einnimmt, der von dem Antriebsmodus abhängig ist.

Mit anderen Worten ist es eine Eingangsgröße für die aktive Fahrwerkseinrichtung, dass mitgeteilt wird, wie der Antriebsmodus aussieht. Dann kann die Einstellung an der Fahrwerkseinrichtung derart gestaltet werden, dass in erhöhtem Maße für eine Sicherheit der Fahrzeuginsassen gesorgt ist.

Bei einem aktiven Fahrwerk lassen sich zunächst Spurwinkel und/oder Sturzwinkel an zumindest einem Rad des Kraftfahrzeugs ändern. Diese bestimmen das Eigenlenkverhalten.

Genauso ist es auch möglich, dass durch die aktive Fahrwerkseinrichtung an zumindest einem Rad eine auf dieses längs der Fahrzeughochachse wirkende Radlast (Kraft) geändert wird. Dies kann z. B. gemäß der DE 10 2007 060 876 A1 durch einen elektromechanischen Wandler in einem Dämpfer des Kraftfahrzeugs erfolgen, der ein Wanken verhindert und die Funktion eines Räder an zwei Seiten des Kraftfahrzeugs miteinander koppelnden Stabilisators aufweist. In einer einfachen Ausführungsform ist ein solcher Stabilisator eine einfache Feder. Wird die Steifigkeit des Stabilisators, nämlich der Feder, geändert, ändert sich auch die längs der Fahrzeughochachse wirkende Radlast, also Kraft auf das Rad. Die Steifigkeit lässt sich dadurch ändern, dass zwischen zwei Federteilen ein Aktuator eingekoppelt wird.

Die Radlast kann auch im Bereich eines Stoßdämpfers durch eine Regelung geändert werden, und weitere Stellgrößen lassen sich z. B. an einer Überlagerungslenkung oder einer Hinterachslenkung definieren.

Bevorzugt ist diese Größe der Eigenlenkgradient.

Es lässt sich somit festlegen, in welchem Ausmaß das Kraftfahrzeug übersteuert, normal fährt oder untersteuert, und zwar in definierter Weise, und dies abhängig vom Antriebsmodus.

Es ist möglich, dass sich die Abhängigkeit vom Antriebsmodus darin ausdrückt, dass die Größe, nämlich insbesondere der Eigenlenkgradient, jeweils verschieden ist. So kann z. B. für einen Heckantrieb ein stärkeres Untersteuern sinnvoller sein als bei einem Vorderradantrieb (Frontantrieb), weil beim Heckantrieb durch die Antriebskräfte ein immanentes Übersteuern ohnehin vorgegeben ist. Insofern gibt es dann bewusst einen Unterschied in dem Eigenlenkgradienten in Abhängigkeit vom Antriebsmodus.

Alternativ ist es hingegen möglich, dass sich der Eigenlenkgradient bei einem Wechsel des Antriebsmodus gerade möglichst wenig ändert, nämlich höchstens um 15 %, bevorzugt um höchstens 10 %, besonders bevorzugt um höchstens 5 %, ganz besonders bevorzugt um höchstens 2 oder 1,5 oder 1 % ändert. In diesem Fall hat der Fahrzeugführer nämlich in jedem Fall das Gefühl, dass sich das Kraftfahrzeug genauso verhält wie zuvor, auch wenn sich der Antriebsmodus geändert hat. Dann muss sich der Fahrzeugführer nicht auf die Änderung im Antriebsmodus umstellen, und er kann das Kraftfahrzeug sicher führen.

Das erfindungsgemäße Kraftfahrzeug nutzt eine aktive Fahrwerkseinrichtung, also eine Fahrwerkseinrichtung, an der das automatische Vornehmen von Einstellungen möglich ist. Eine Steuerungseinrichtung kann bewirken, dass sich bei einer Änderung des Antriebsmodus eine automatische Änderung bezüglich zumindest einer an der Fahrwerkseinrichtung des Kraftfahrzeugs möglichen Einstellung ergibt.

Das erfindungsgemäße Kraftfahrzeug weist somit eine aktive Fahrwerkseinrichtung auf, der eine Steuerungseinrichtung zugeordnet ist, die zur automatischen Durchführung des Verfahrens ausgelegt ist, wobei bevorzugte Ausführungsformen des Verfahrens auch bevorzugt von der Steuerungseinrichtung umgesetzt werden.

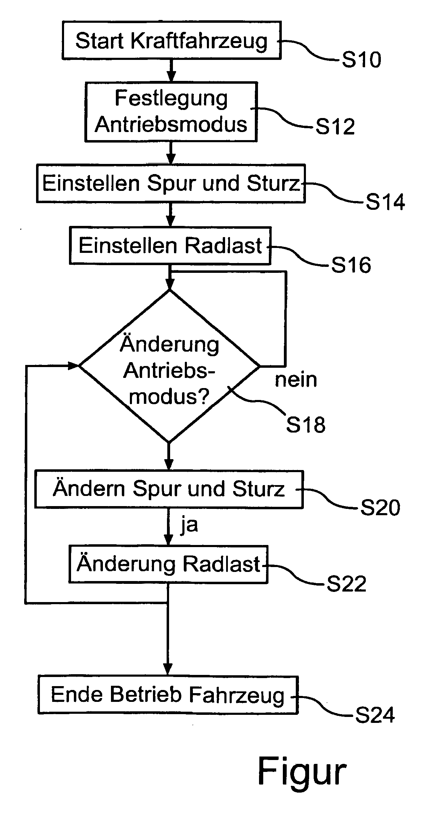

Nachfolgend wird eine bevorzugte Ausführungsform der Erfindung unter Bezug auf die Zeichnung beschrieben, in der
- Fig. 1: ein Flussschaubild zur Erläuterung einer Ausführungsform des erfindungsgemäßen Verfahren ist.

Mit einem in Schritt S10 erfolgenden Start eines Kraftfahrzeugs legt der Fahrzeugführer oder ein Steuerungssystem des Kraftfahrzeugs in Schritt S12 fest, in welchem Antriebsmodus die Fahrt beginnen soll. Der Antriebsmodus kann z. B. ein Heckantrieb, ein Frontantrieb oder ein Allradantrieb sein. Grundsätzlich unterscheiden sich zwei Antriebsmodi bezüglich zumindest eines Rades des Kraftfahrzeugs darin, ob es angetrieben wird oder nicht. Das Kraftfahrzeug soll vorliegend zumindest zwei solcher Antriebsmodi ermöglichen. Passend zu diesem Antriebsmodus werden Spur und Sturz in Schritt S14 eingestellt, und die Radlast auf die Räder wird gemäß Schritt S16 eingestellt, z. B. indem an einem so genannten Stabilisator, also einer Räder an zwei Seiten des Kraftfahrzeugs miteinander koppelnden Feder, die Steifigkeit entsprechend eingestellt wird.

In Schritt S18 wird nun überprüft, ob sich an dem Antriebsmodus etwas geändert hat. Dies kann durch den Fahrer hervorgerufen werden, oder auch durch ein automatisches Steuerungssystem.

Solange keine Änderung im Antriebsmodus erfolgt, wird wiederholt geprüft, ob der Antriebsmodus sich ändert. Sobald sich der Antriebsmodus gemäß Schritt 18 geändert hat, werden möglichst unmittelbar mit der Änderung Spur und Sturz neu eingestellt gemäß Schritt S20, und die Radlast wird gemäß Schritt S22 ebenfalls neu eingestellt.

Ziel ist hierbei gemäß einer Ausführungsform, dass das Kraftfahrzeug bei allen Antriedsmodi denselben Eigenlenkgradienten aufweist, also das Verhältnis von Lenkradwinkel zu Fahrzeuggeschwindigkeit im Falle, dass ein Kreis mit konstantem Radius gefahren wird. Alternativ kann es Ziel sein, den Eigenlenkgradienten passend zu jedem Antriebsmodus in bestimmter Weise festzulegen, um je nach Antriebsmodus für eine optimale Sicherheit zu sorgen. Beispielsweise kann der Eigenlenkgradient sich in dem untersteuernden Bereich bewegen, wenn der Antriebsmodus einem Heckantrieb entspricht.

Nach Durchlaufen des Schrittes S22 wird wiederum zum Schritt S18 übergegangen und so lange geprüft, ob sich der Antriebsmodus geändert hat oder ändern soll, bis dies wieder der Fall ist und abermals die Schritte S20 und S22 durchlaufen werden. Irgendwann zweigt aus dem Flussschaubild der Schritt S24 ab, demgemäß der Betrieb des Fahrzeugs beendet wird, also das Fahrzeug angehalten und ausgeschaltet wird.

Durch die Erfindung wird passend zu dem Antriebsmodus jeweils optimal Spur und Sturz und Radlast so eingestellt, dass der Fahrzeugführer das Fahrzeug sicher führen kann, nämlich entweder, weil er dessen Eigenlenkverhalten optimal kennt und berechnen kann, oder weil das Eigenlenkverhalten optimal auf den Antriebsmodus abgestimmt ist.

## Patentansprüche

1. Verfahren zum Betreiben eines Kraftfahrzeugs, das in zumindest zwei Antriebsmodi fahrbar ist, die sich bezüglich zumindest eines Rades des Kraftfahrzeugs darin voneinander unterscheiden, ob es oder ob es nicht angetrieben wird, wobei
bei einer Änderung des Antriebsmodus eine automatische Änderung bezüglich zumindest einer an einer Fahrwerkseinrichtung des Kraftfahrzeugs möglichen Einstellung erfolgt,
**dadurch gekennzeichnet, dass**
die Änderung der Einstellung derart erfolgt, dass eine das Eigenlenkverhalten des Kraftfahrzeugs beschreibende Größe einen vorbestimmten Wert annimmt, der von dem Antriebsmodus abhängig ist.

2. Verfahren nach Anspruch 1,
**dadurch gekennzeichnet, dass**
die Änderung der Einstellung beinhaltet, dass ein Spurwinkel und/oder ein Sturzwinkel an zumindest einem Rad des Kraftfahrzeugs geändert wird.

3. Verfahren nach Anspruch 1 oder Anspruch 2,
**dadurch gekennzeichnet, dass**
die Änderung der Einstellung beinhaltet, dass an zumindest einem Rad eine auf dieses längs der Fahrzeughochachse wirkende Radlast geändert wird.

4. Verfahren nach Anspruch 3,
**dadurch gekennzeichnet, dass**
die Steifigkeit eines Räder an zwei Seiten des Kraftfahrzeugs miteinander koppelnden Stabilisators geändert wird.

5. Verfahren nach einem der vorhergehenden Ansprüche,
**dadurch gekennzeichnet, dass**
die Größe der Eigenlenkgradient ist.

6. Verfahren nach Anspruch 5,
**dadurch gekennzeichnet, dass**
sich der Eigenlenkgradient bei einem Wechsel des Antriebsmodus höchstens um 15 %, bevorzugt höchstens um 10 %, besonders bevorzugt höchstens um 5 %, ganz besonders bevorzugt höchstens um 1 % ändert.

7. Kraftfahrzeug, welches zumindest in zwei Antriebsmodi fahrbar ist, die sich bezüglich zumindest eines Rades des Kraftfahrzeugs darin voneinander unterscheiden, ob dieses oder ob dieses nicht angetrieben wird, mit einer Fahrwerkseinrichtung, die beim Betrieb des Fahrzeugs eine automatische Änderung bezüglich zumindest einer Einstellung ermöglicht, und mit einer Steuerungseinrichtung, die bewirkt, dass bei einer Änderung des Antriebsmodus eine automatische Änderung bezüglich zumindest einer an der Fahrwerkseinrichtung des Kraftfahrzeugs möglichen Einstellung erfolgt,
**dadurch gekennzeichnet, dass**
die Änderung der Einstellung derart erfolgt, dass eine das Eigenlenkverhalten des Kraftfahrzeugs beschreibende Größe einen vorbestimmten Wert annimmt, der von dem Antriebsmodus abhängig ist.

## Claims

1. Method for operating a motor vehicle which is drivable in at least two drive modes which differ from one another, in respect of at least one wheel of the motor vehicle, regarding whether it is driven or not, wherein
if there is a change in the drive mode an automatic change takes place with respect to at least one possible setting of a chassis device of the vehicle,
**characterised in that**
the change in the setting is carried out such that a variable which describes the self-steering behaviour of the vehicle assumes a predetermined value that is a function of the drive mode.

2. Method according to claim 1, **characterised in that**
the change in the setting includes changing a toe angle and/or a camber angle at at least one wheel of the vehicle.

3. Method according to claim 1 or claim 2,
**characterised in that**
the change in the setting includes changing a wheel load at at least one wheel on which the wheel load acts along the vertical axis of the motor vehicle.

4. Method according to claim 3, **characterised in that** the rigidity of a stabiliser which couples wheels on two sides of the vehicle to one another is changed.

5. Method according to one of the preceding claims, **characterised in that** the variable is the self-steering gradient.

6. Method according to claim 5, **characterised in that** the self-steering gradient changes by at most 15%, preferably by at most 10%, particularly preferably by at most 5%, most particularly preferably by at most 1%, when the drive mode is changed.

7. Motor vehicle which is drivable in at least two drive modes which differ from one another, in respect of at least one wheel of the vehicle, regarding whether said wheel is driven or not, having a chassis device which enables an automatic change in respect of at least one setting during operation of the vehicle; and having a control device which ensures that an automatic change is made to at least one possible setting at the chassis device of the vehicle in response to a change of the drive mode,
**characterised in that** the change to the setting is carried out such that a variable which describes the self-steering behaviour of the motor vehicle assumes a predetermined value which is a function of the drive mode.

## Revendications

1. Procédé de fonctionnement d'un véhicule automobile, qui peut se déplacer en au moins deux modes de commande, qui se distinguent l'un de l'autre par rapport à au moins une roue du véhicule automobile en ce qu'elle est entraînée ou ne l'est pas, dans lequel, lors d'un changement du mode de commande, il se produit un changement automatique concernant au moins un réglage possible sur un mécanisme de roulement du véhicule automobile,
**caractérisé en ce que** :
le changement du réglage se fait en sorte qu'une grandeur décrivant un comportement directeur intrinsèque du véhicule automobile reçoive une valeur prédéterminée qui dépende du mode de commande.

2. Procédé selon la revendication 1,
**caractérisé en ce que** :
le changement du réglage implique de modifier un angle de pincement et/ou un angle de carrossage sur au moins une roue du véhicule automobile.

3. Procédé selon la revendication 1 ou la revendication 2,
**caractérisé en ce que** :
le changement du réglage implique de modifier sur au moins une roue une charge agissant sur celle-ci le long de l'axe normal du véhicule.

4. Procédé selon la revendication 3,
**caractérisé en ce que** :
la rigidité d'une roue est modifiée sur deux côtés du véhicule automobile au moyen d'un stabilisateur qui couple ceux-ci l'un à l'autre.

5. Procédé selon l'une quelconque des revendications précédentes,
**caractérisé en ce que** :
la grandeur est le gradient directeur intrinsèque.

6. Procédé selon la revendication 5,
**caractérisé en ce que** :
lors d'un changement du mode de commande, le gradient directeur intrinsèque varie au maximum de 15 %, de préférence au maximum de 10 %, mieux encore au maximum de 5 %, bien mieux encore au maximum de 1%.

7. Véhicule automobile, qui peut se déplacer au moins en deux modes de commande, qui se distinguent l'un de l'autre par rapport à au moins une roue du véhicule automobile en ce qu'elle est entraînée ou ne l'est pas, avec un mécanisme de roulement qui, lors du fonctionnement du véhicule, permet un changement automatique concernant au moins un réglage et un dispositif de commande, qui fait que, lors d'un changement du mode de commande, il se produit un changement automatique concernant au moins un réglage possible sur le mécanisme de roulement du véhicule automobile,
**caractérisé en ce que** :
le changement du réglage se fait en sorte qu'une grandeur décrivant un comportement directeur intrinsèque du véhicule automobile reçoive une valeur prédéterminée qui dépende du mode de commande.
